(19) Europäisches Patentamt / European Patent Office / Office européen des brevets

(11) **EP 4 585 480 A1**

(12) **EUROPEAN PATENT APPLICATION**

(43) Date of publication:
**16.07.2025 Bulletin 2025/29**

(21) Application number: **24151599.8**

(22) Date of filing: **12.01.2024**

(51) International Patent Classification (IPC):
**B60W 30/02** (2012.01) **G06N 3/08** (2023.01)
**B60T 8/17** (2006.01) **B60T 8/1755** (2006.01)
**G05B 13/02** (2006.01) **G05B 17/02** (2006.01)
**G06N 5/025** (2023.01)

(52) Cooperative Patent Classification (CPC):
**B60W 30/02; B60T 8/1708; B60T 8/1755;**
**G05B 13/0265; G06N 3/08; G06N 5/025;**
B60T 2240/06; B60W 2050/0028; B60W 2050/0088;
B60W 2300/12; B60W 2300/14; B60W 2720/30;
B60Y 2200/14; B60Y 2200/147
(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventors:
• **WISELL, Lukas**
  **412 50 GÖTEBORG (SE)**
• **VAN DAM, Sander**
  **417 53 GÖTEBORG (SE)**
• **KIEU, Mikael**
  **214 34 MALMÖ (SE)**

• **SHINGADE, Kartik**
  **412 80 GÖTEBORG (SE)**
• **ERDINC, Umur**
  **413 26 GÖTEBORG (SE)**
• **GELSO, Esteban**
  **421 51 VÄSTRA FRÖLUNDA (SE)**
• **SADEGHI KATI, Maliheh**
  **433 51 ÖJERSJÖ (SE)**
• **PARTHASARATHY, Dhasarathy**
  **415 35 GÖTEBORG (SE)**

(74) Representative: **Ström & Gulliksson AB**
**P.O. Box 4188**
**203 13 Malmö (SE)**

Remarks:
Amended claims in accordance with Rule 137(2) EPC.

(54) **SAFE CONTROL OF VEHICLE COMBINATIONS**

(57) Computer systems and methods are provided for training a machine learning model to determine a safe torque allocation for a vehicle combination and for determining a safe torque allocation. One system is configured to perform a plurality of simulations for motion of the vehicle combination based on a plurality of torque allocations and operating points, classify each simulation as safe or unsafe, and train a machine learning model using the classified simulations. One system is configured to receive torque allocations and an operating point of a vehicle combination, and output, using the trained machine learning model, one or more safe torque allocations.

200

FIG. 2

EP 4 585 480 A1

**Description**

**TECHNICAL FIELD**

The disclosure relates generally to vehicle control. In particular aspects, the disclosure relates to safe control of vehicle combinations. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

Vehicle combinations comprising a tractor and one or more trailers are often over-actuated, which means there are more actuators than number of controlled motions. This means that it is possible to allocate torque (i.e. braking or acceleration torque) differently between the tractor and the trailer(s). This can be used to optimise the torque allocation in some way, for example by maximising energy efficiency. However, to be able to do this, one must first know which allocations are safe. There is currently no quick and efficient way to implement such an assessment online for different vehicle operating points.

It is therefore desired to provide systems, methods and other approaches that attempt to resolve or at least mitigate one or more of these issues.

**SUMMARY**

This disclosure provides systems, methods and other approaches for determining a safe torque allocation for a vehicle combination. In particular, a number of simulations for motion of the vehicle combination are performed. The simulations are performed for different combinations of torque allocations and vehicle states, and are each classified as either safe or unsafe. A machine learning model can then be trained using the results of the simulation. The trained model can then be used to output which torque allocations are safe and which are unsafe for a given operating point of the vehicle combination.

According to a first aspect of the disclosure, there is provided a computer system for training a machine learning model to determine a safe torque allocation for a vehicle combination comprising a tractor unit and at least one trailing unit, the computer system comprising processing circuitry configured to perform a plurality of simulations for motion of the vehicle combination based on a plurality of torque allocations and a plurality of operating points for the vehicle combination, classify each simulation as safe or unsafe, and train a machine learning model using the plurality of simulations to determine a safe torque allocation for the vehicle combination based on an operating point of the vehicle combination.

The first aspect of the disclosure may seek to provide a machine learning model that can quickly and reliably output safe torque allocations based on a state of a vehicle combination. This can be implemented in a vehicle combination so that it can be controlled in a safe manner dependent on parameters of the vehicle combination and/or its environment.

Optionally in some examples, including in at least one preferred example, each torque allocation comprises a respective torque allocation for each unit of the vehicle combination, and the sum of the respective torque allocations meets a total torque allocation for the vehicle combination. A technical benefit may include that the machine learning model is capable of providing safe torque allocations for vehicle combinations having different configurations of units, and that a chosen allocation can be implemented at a unit level.

Optionally in some examples, including in at least one preferred example, each operating point is defined based on one or more of a velocity v of the vehicle combination, a lateral acceleration $a_y$ of the vehicle combination, one or more axle loads $F_z$ of one or more units of the vehicle combination, a yaw rate $\dot{\psi}$ of one or more units of the vehicle combination a slip angle $\alpha$ of one or more units of the vehicle combination, a slip angular rate $\dot{\alpha}$ of one or more units of the vehicle combination, a road wheel angle $\delta$ of one or more units of the vehicle combination, a surface friction $\mu$, a curve radius r, and/or a path gradient. A technical benefit may include that the machine learning model is capable of providing safe torque allocations for operating points of vehicle combinations that are defined in different ways, enabling the model to be used in various different scenarios.

Optionally in some examples, including in at least one preferred example the processing circuitry is configured to classify a simulation as unsafe if the motion simulated by the simulation comprises an instability of the vehicle combination. A technical benefit may include that the machine learning model is capable of providing torque allocations that avoid unsafe and/or unstable operating modes of the vehicle combination, ensuring safe operation.

According to a second aspect of the disclosure, there is provided a computer system for determining a safe torque allocation for a vehicle combination comprising a tractor unit and at least one trailing unit, the computer system comprising processing circuitry configured to receive a plurality of torque allocations that meet a torque request for the vehicle combination, receive an operating point of a vehicle combination, and output, using a machine learning model trained according to the first aspect, one or more safe torque allocations for the vehicle combination based on the received torque allocations and operating point.

The second aspect of the disclosure may seek to output safe torque allocations based on a state of a vehicle combination in a fast and reliable manner. This can be implemented online, so that the vehicle combination can be controlled to meet a torque request in a safe manner dependent on parameters of the vehicle combination and/or its environment.

Optionally in some examples, including in at least one preferred example the received operating point is a current operating point of the vehicle combination. A technical benefit may include that safe torque allocations can be output based on current operating parameters and travelling conditions, ensuring that the vehicle combination can be controlled in an adaptive manner.

Optionally in some examples, including in at least one preferred example, the processing circuitry is configured to generate an alert or modify the torque request if the one or more output safe torque allocations does not meet one or more second criteria. A technical benefit may include that an operator of the vehicle may be informed that no optimal torque allocations are available, or that the vehicle can be controlled in a different manner to satisfy the one or more second criteria.

Optionally in some examples, including in at least one preferred example, the machine learning model is configured to output a plurality of safe torque allocations for the vehicle combination, and the processing circuitry is configured to determine a safe torque allocation from the plurality of safe torque allocations based on one or more first criteria. A technical benefit may include that a range of possible safe torque allocations can be provided, from which one can be chosen based on a given parameter, for example selecting a safe torque allocation that provides good energy efficiency.

Optionally in some examples, including in at least one preferred example, the processing circuitry is configured to apply a safety margin to the one or more output safe torque allocations. A technical benefit may include that operation of the vehicle combination is maintained comfortably within a safe operating envelope and not near a limit of unsafe or unstable operation.

Optionally in some examples, including in at least one preferred example, the processing circuitry is configured to cause an output safe torque allocation to be implemented as a torque allocation for the vehicle combination. A technical benefit may include that the vehicle combination can be controlled in a safe manner in a fast and reliable way.

According to a third aspect of the disclosure, there is provided a vehicle comprising the computer system of the first and/or second aspects. The third aspect of the disclosure may seek to provide a vehicle capable of determining a safe torque allocation based on a given operating point.

According to a fourth aspect of the disclosure, there is provided a computer-implemented method for training a machine learning model to determine a safe torque allocation for a vehicle combination comprising a tractor unit and at least one trailing unit, the method comprising performing, by processing circuitry of a computer system, a plurality of simulations for motion of the vehicle combination based on a plurality of torque allocations and a plurality of operating points for the vehicle combination, classifying, by the processing circuitry, each simulation as safe or unsafe, and training, by the processing circuitry, a machine learning model using the plurality of simulations to determine a safe torque allocation for the vehicle combination based on an operating point of the vehicle combination.

The fourth aspect of the disclosure may seek to provide a machine learning model that can quickly and reliably output safe torque allocations based on a state of a vehicle combination. This can be implemented in a vehicle combination so that it can be controlled in a safe manner dependent on parameters of the vehicle combination and/or its environment.

According to a fifth aspect of the disclosure, there is provided a computer-implemented method for determining a safe torque allocation for a vehicle combination comprising a tractor unit and at least one trailing unit, the method comprising receiving, by processing circuitry of a computer system, a plurality of torque allocations that meet a torque request for the vehicle combination, receiving, by the processing circuitry an operating point of a vehicle combination, and outputting, by the processing circuitry and using a machine learning model trained according to the fourth aspect, one or more safe torque allocations for the vehicle combination based on the received torque allocations and operating point.

The fifth aspect of the disclosure may seek to output safe torque allocations based on a state of a vehicle combination in a fast and reliable manner. This can be implemented online, so that the vehicle combination can be controlled in a safe manner dependent parameters of the vehicle combination and/or its environment.

According to a sixth aspect of the disclosure, there is provided a computer program product comprising program code for performing, when executed by processing circuitry, the computer-implemented method of the fourth and/or fifth aspects. The sixth aspect of the disclosure may seek to enable new vehicles and/or legacy vehicles to be conveniently configured, by software installation/update, to determine a safe torque allocation based on a given operating point in a fast and reliable manner.

According to a seventh aspect of the disclosure, there is provided a non-transitory computer-readable storage medium comprising instructions, which when executed by processing circuitry, cause the processing circuitry to perform the computer-implemented method of the fourth and/or fifth aspects. The seventh aspect of the disclosure may seek to enable new vehicles and/or legacy vehicles to be conveniently configured, by software installation/update, to determine a safe torque allocation based on a given operating point in a fast and reliable manner.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

> **FIG. 1** schematically shows a top view of a vehicle combination according to an example.
> **FIG. 2** is a flow chart of a computer-implemented method according to an example.
> **FIG. 3** is a flow chart of a computer-implemented method according to an example.
> **FIG. 4** shows a plot of torque allocations output from a machine learning model, according to an example.
> **FIG. 5** is schematic diagram of a computer environment according to an example.
> **FIG. 6** is a schematic diagram of a computer system for implementing examples disclosed herein, according to an example.

Like reference numerals refer to like elements throughout the description.

**DETAILED DESCRIPTION**

The detailed description set forth below provides information and examples of the disclosed technology with sufficient detail to enable those skilled in the art to practice the disclosure.

Vehicle combinations comprising a tractor and one or more trailers are often over-actuated, which means there are more actuators than number of controlled motions. This means that it is possible to allocate torque (i.e. braking or acceleration torque) differently between tractor and trailer. This can be used to optimise the torque allocation in some way, for example by maximising energy efficiency. However, to be able to do this, one must first know which allocations are safe. There is currently no quick and efficient way to implement such an assessment online for different vehicle operating points.

To remedy this, systems, methods and other approaches are provided for determining a safe torque allocation for a vehicle combination. In particular, a number of simulations for motion of the vehicle combination are performed. The simulations are performed for different combinations of torque allocations and vehicle states, and are each classified as either safe or unsafe. A machine learning model can then be trained using the results of the simulation. The trained model can then be used online and, based on a current state of the vehicle, output which torque allocations are safe and which are unsafe.

By training and implementing a machine learning model in this way, a vehicle combination can be provided with a fast and reliable way to output safe torque allocations based on a state of the vehicle combination. This can be implemented online, so that the vehicle combination can be controlled in a safe manner dependent on current operating parameters and travelling conditions. This implementation also allows a range of possible safe torque allocations to be provided, from which one can be chosen based on a given parameter, for example selecting a safe torque allocation that provides good energy efficiency.

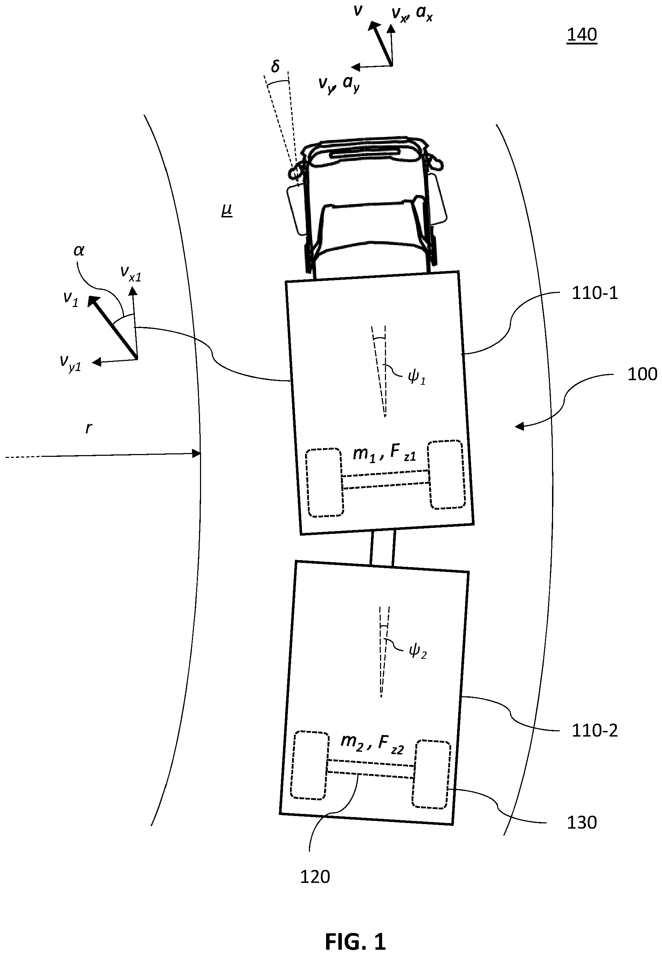

**FIG. 1** schematically shows a top view of an example vehicle combination **100** of the type considered in this disclosure. The vehicle combination **100** comprises a number of units **110,** including a tractor unit **110-1** and a trailing unit **110-2.** Whilst a single trailing unit **110-2** is shown, it will be appreciated that the vehicle combination **100** may comprise further trailing units. This gives rise to different types and designations of vehicle combinations. The vehicle combination **100** shown in **FIG. 1** is an example of a truck, however the systems and methods disclosed herein can be used with any suitable form of vehicle combination **100,** such as trucks, buses, and the like.

A tractor unit, such as the tractor unit **110-1,** is generally the foremost unit in a vehicle combination **100,** and may comprise the cabin for the driver, including steering controls, dashboard displays and the like. Generally, the tractor unit **110-1** is used to provide propulsion power for the vehicle combination **100.** In the example of **FIG. 1,** the tractor unit **110-1** may also be used to store goods that are being transported by the vehicle combination **100.**

A trailing unit, such as the trailing unit **110-2,** is generally used to store goods that are being transported by the vehicle combination **100.** A trailing unit may be a truck, trailer, dolly and the like. A trailing unit may also provide propulsion to the vehicle combination **100.** In vehicle combinations such as that shown in **FIG. 1,** vehicle motion management may be available on a unit level to receive requests from a manual or virtual driver to coordinate the propulsion, braking and steering.

Each unit **110** comprises a number of axles **120,** each having a number of wheels **130.** It will be appreciated that any suitable number of axles **120** may be provided on the respective units **110.** A trailing unit **110-2** without a front axle is known as a semi-trailer. It will also be appreciated that any number of the tractor axles and/or trailer axles may be driven axles, including zero (i.e. one of the units **110** may include at least one driven axle while the other does not).

**FIG.** 1 shows the relevant parameters of the vehicle combination **100.** Examples of parameters of the vehicle combination **100** may include, for example, a velocity $v$ (including a longitudinal velocity $v_x$ and a lateral velocity $v_y$), a longitudinal acceleration $a_x$, and a lateral acceleration $a_y$. These parameters may also be defined on a unit basis. For example, each unit **110** has its own velocity and acceleration. For example, each unit **110** has a respective velocity $v_i$ which can be considered as two components: a longitudinal velocity $v_{xi}$ and a lateral velocity $v_{yi}$, where $i$ is the unit index. Similarly, the acceleration of each unit can be considered as two components, a longitudinal acceleration $a_{xi}$ and a lateral acceleration $a_{yi}$. Each unit **110** also has a mass $m$ that may contribute to a load $F_z$ on the axles **120** of the unit **110**. Each unit **110** has a respective yaw angle $\psi$, which is the angle between an environmental reference frame and the vehicle reference frame.

**FIG. 1** also shows the relevant parameters of the wheels **130** of the vehicle combination **100**. For example, each wheel **130** may have a road wheel angle $\delta$, which is the angle between the longitudinal axis of the unit **110** of the wheel **130** and the direction in which the wheel **130** is facing. The road wheel angle $\delta$ may also be referred to as the steering angle $\delta$. When the vehicle combination **100** is in motion, the wheels **130** experience slip. Slip can be expressed as the slip on the vehicle **100** as a whole, slip on a given unit **110**, slip on a given axle **120**, or the slip on a given wheel **130**. These parameters are known in the art, and not discussed in detail here. However, it is noted that the slip angle $\alpha$ for a given unit **110**, i.e. the angle between the longitudinal dimension of the unit **110** (the direction in which the unit **110** is pointing) and the traveling direction of the unit **110**, can be defined as:

$$\alpha = arctan\left(\frac{v_{yi}}{v_{xi}}\right)$$

The slip angle may also be known as the side slip angle.
**FIG. 1** also shows the relevant parameters of the route that the vehicle combination 100 is travelling. In the example of **FIG. 1**, the vehicle combination **100** is shown travelling on a curved path having a curve radius $r$. The path may have a gradient in a longitudinal and/or lateral direction. The surface on which the vehicle combination **100** is travelling has a surface friction $\mu$. Whilst a curved path is shown in **FIG. 1**, it will be appreciated that the approaches disclosed herein are applicable to any suitable operation of the vehicle combination **100**, including straight-line driving.
The various parameters illustrated in **FIG. 1** can be used to define operating points **140** for the vehicle combination **100**. For example, at a certain point in its journey, the vehicle combination **100** may have a certain velocity v (including a longitudinal velocity $v_x$ and a lateral velocity $v_y$) and lateral acceleration $a_y$. At that operating point **140**, each unit may have a certain yaw rate $\dot{\psi}_i$ and axle load $F_{zik}$ on a given axle, where $k$ is the axle index. At the operating point **140**, each unit **110** may have a slip angle $\alpha$ and a slip angular rate $\dot{\alpha}$, and the wheels **130** of each unit **110** may each have a road wheel angle $\delta$. An operating point **140** may also include parameters of the route and/or environment in which the vehicle combination **100** is travelling, for example a surface friction $\mu$, a curve radius $r$, and/or a path gradient.
At any given operating point **140**, a torque request may be received for the vehicle combination **100**, for example from a manual or virtual driver, relating to some desired motion of the vehicle combination **100**. The torque request may be at a global (vehicle) level. A global torque request can be divided into respective torque requests for each unit **110**. The sum of the respective unit torque requests meets the total global torque request for the vehicle combination **100**. For example, the torque request for the vehicle combination **100** may be considered as a total torque request $T$ (covering braking and/or propulsion), comprising a torque request $T_{req,tractor}$ for the tractor unit **110-1** and a torque request $T_{req,trailer}$ for the trailing unit **110-2**. The torque request is translated into a torque allocation for the vehicle combination **100**, comprising the actual signals provided to the motion support devices of the vehicle combination **100**, for example one or more electrical machines of a propulsion or braking system of the vehicle combination **100** configured to drive, e.g. provide torque and/or steering to, one or more axles **120** or individual wheels **130** of the vehicle combination **100**. The torque allocation may also be at a vehicle or a unit level. This allocation of torque may be performed by a vehicle motion manager (VMM) of the vehicle combination **100**.
The ability to allocate torque (i.e. braking or acceleration torque) differently between a tractor unit **110-1** and a trailing unit **110-2** can be used to optimise the torque allocation in some way, for example by maximising energy efficiency. However, to be able to do this, one must first know which allocations are safe. There is currently no quick and efficient way to implement such an assessment online for different operating points **140** of a vehicle combination **100**. To remedy this, the present disclosure provides systems, methods and other approaches for training and implementing a machine learning model to determine a safe torque allocation for a vehicle combination **100**.

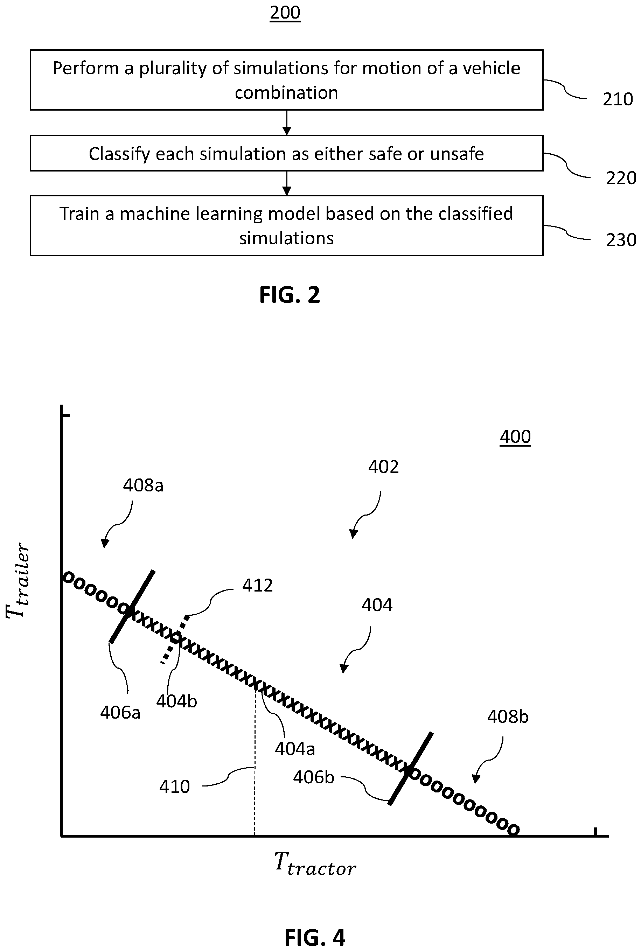

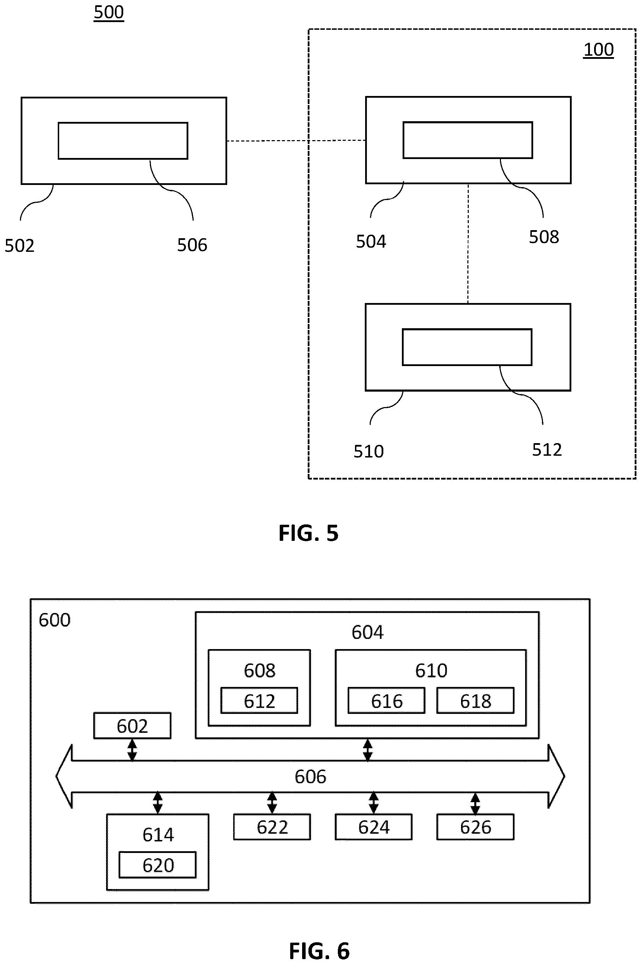

**FIG. 2** is a flow chart of an example computer-implemented method **200** for training a machine learning model to determine a safe torque allocation for a vehicle combination **100**, according to an example. The method **200** may be performed by a computer system associated with a vehicle combination, for example the vehicle combination **100** shown in the example of **FIG. 1**. The computer system may be a control system implemented on-board the vehicle combination, remotely from the vehicle combination, or a combination of the two, as will be discussed in relation to **FIG. 5**. The method **200** may be performed by processing circuitry of the computer system.

At **210,** a plurality of simulations are performed for motion of the vehicle combination **100.** Each simulation is based on a torque allocation and an operating point **140** for the vehicle combination **100.** That is to say, each simulation models the motion of the vehicle combination **100** in response to receiving a particular torque allocation at an operating point **140** defined by one or parameters of the vehicle combination **100** and/or its environment. The simulations may be performed using a suitable vehicle model. A suitable vehicle model should preferably be a vehicle model that captures vehicle dynamics such as longitudinal, lateral, and vertical dynamics (depending on instabilities that are under consideration). The model should preferably include a sufficient number of parameters and factors to provide an accurate representation of the vehicle's behaviour, especially under conditions associated with instability. Examples of such models include lower fidelity models such as single track or two track models and higher fidelity models such as the Volvo Transport Model. The model should preferably include a sufficiently accurate tyre model, such as a Pajecka tyre model, a brush tyre model, or the like.

As discussed above, each torque allocation may be a global torque allocation for the vehicle combination **100** or may comprise a respective torque allocation for each unit **110** of the vehicle combination **100,** where the sum of the respective torque allocations meets a total torque allocation for the vehicle combination **100.** The torque allocations used in the simulations may relate to braking and/or acceleration of the vehicle combination **100.** As also discussed above, each operating point **140** is defined based on one or more of a velocity $v$ of the vehicle combination **100,** a lateral acceleration $a_y$ of the vehicle combination **100,** one or more axle loads one or more units **110** of the vehicle combination **100,** a yaw rate $\dot{\psi}$ of one or more units **110** of the vehicle combination **100,** a slip angle $\alpha$ of one or more units **110** of the vehicle combination **100,** a slip angular rate $\dot{\alpha}$ of one or more units **110** of the vehicle combination **100,** a road wheel angle $\delta$ of one or more units **110** of the vehicle combination **100,** a surface friction $\mu$, a curve radius $r$, and a path gradient. In some examples, a slip angle $\alpha$ of one or more axles **120** or one or more wheels **130** may additionally or alternatively be used.

At **220,** each simulation is classified as either safe or unsafe. For example, a simulation may be classified as unsafe if the simulated motion of the vehicle combination **100** includes an instability of the vehicle combination **100.** In some examples, if any state of the vehicle combination **100** during the simulation is considered unsafe, every time instance of that simulation is classified as unsafe. May different types of instability may be identified. In some examples, an instability is the occurrence of jack-knifing, when the tractor unit **110-1** starts to skid sideways and pushes the tractor unit **110-2** causing the tractor unit **110-1** to turn around a vertical axis until it hits the trailing unit **110-2.** In some examples, an instability is the occurrence of trailer swing, when the wheels of the trailing unit **110-2** slip while the wheels of the tractor unit **110-1** do not, causing the trailing unit **110-2** to swing around a vertical axis. In some examples, an instability is the occurrence of combinational spin-out, where both jack-knifing and trailer swing occur. In some examples, an instability is the occurrence of rollover, where one or more units **110** of the vehicle combination **100** tips over. In some examples, an instability is the occurrence of off-tracking, where one or more units **110** of the vehicle combination **100** travels outside of its intended path. In some examples, an instability may be identified based on the slip angular rate $\dot{\alpha}$ and/or the yaw rate $\dot{\psi}$ of one or more units **110** of the vehicle combination **100.** This captures whether a unit experiences a fast change of yaw angle $\psi$ within a short amount of time, which indicates unstable behaviour. In some examples, an inability may include rearward amplification, which is a measure of signal oscillation (such as the yaw rate $\dot{\psi}$ of one or more units **110**) during sudden steering.

If a simulation does not result in an instability of the vehicle combination **100,** it is classified as safe. In these examples, the simulated motion of the vehicle combination **100** may be as intended or expected for a corresponding motion request.

In this way, each pair of a torque allocation and an operating point **140** is classified based on the resulting simulated motion. As such, a number of data points are defined comprising a torque allocation and operating point pair and an associated safety or stability classification. These data points can then be used as training data for a machine learning model. It will be appreciated that a significant number of data points may be required to train the machine learning model to a sufficiently accurate and reliable level.

At **230,** a machine learning model is trained using the data points to determine a safe torque allocation for the vehicle combination **100.** In particular, at least some of the data points are used to train the machine learning model such that the model adapts its parameters (weights and biases) in order to minimize the error between predictions and actual values. In some embodiments, as the machine learning model is trained, at least some the data points are used to monitor the model's performance in terms of hyperparameters (e.g., learning rate, regularization strength). This helps prevent overfitting by providing an independent dataset for tuning. Additionally, the validation data can be used to compare different models and select the best one.

Any suitable machine learning model may be used. Some suitable models include decision tree models, random forest models, and neural networks. In some examples, a neural network having one, two, or three hidden layers may be used. In one example, a feed-forward neural network having three hidden layers is used. Neural networks can capture intricate patterns with potential for improved understanding through hyperparameter adjustments.

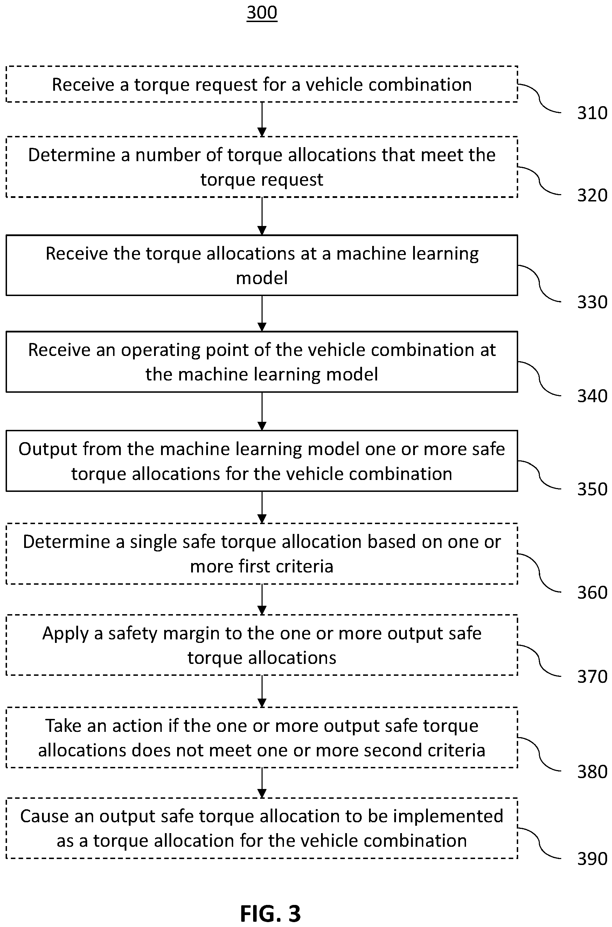

Due to the classification of the various simulations, the trained machine learning model is capable of providing safe torque allocations that avoid unsafe and/or unstable operating modes of the vehicle combination. Once the machine learning model has been trained, it can be used to determine a safe torque allocation based on an input operating point **140** of the vehicle combination **100**. This will be explained in relation to **FIG. 3**.

**FIG. 3** is a flow chart of an example computer-implemented method **300** for determining a safe torque allocation for a vehicle combination **100**, according to an example. The method **300** may be performed by a computer system associated with a vehicle combination, for example the vehicle combination **100** shown in the example of **FIG. 1**. The computer system may be a control system implemented on-board the vehicle combination, remotely from the vehicle combination, or a combination of the two, as will be discussed in relation to **FIG. 5**. The method **300** may be performed by processing circuitry of the computer system.

At **310**, a torque request for the vehicle combination **100** is received. As discussed above, the torque request for the vehicle combination **100** may be received, for example, from a manual or virtual driver. The torque request may be a global torque request that can be divided into respective torque requests for each unit **110**. The sum of the respective unit torque requests meets the total global torque request for the vehicle combination **100**.

At **320**, a number of different torque allocations are determined that meet the torque request. This may be performed by a VMM of the vehicle combination **100**, as known in the art. The torque allocations may be global torque allocations for the vehicle combination **100** or may comprise a respective torque allocation for each unit **110** of the vehicle combination **100**. In some examples, it may be ensured that the torque allocations has a sufficient resolution. This may relate to the number of torque allocations determined for the torque request, and/or their distribution between maximum and minimum values.

At **330**, a machine learning model receives the torque allocations determined at **320** from the torque request received at **310**. The machine learning model may be trained according to the method **200**. The machine learning model may be implemented as a software module in a computer system, for example a control system of the vehicle combination **100**, as will be discussed in relation to **FIG. 5**.

At **340**, the machine learning model receives an input in the form of an operating point **140** of a vehicle combination **100**. As discussed above, an operating point **140** may be defined based on a number of different parameters of the vehicle combination **100** and/or its environment.

At **350**, the machine learning model outputs one or more safe torque allocations for the vehicle combination **100**. In particular, due to the training performed in the method **200**, the machine learning model is able to output one or more safe torque allocations for the input operating point **140** from the number of torque allocations received at **330**. Depending on how the machine learning model is trained and how the input torque allocations are determined, the output safe torque allocations may be global torque allocations for the vehicle combination **100** or may comprise a respective torque allocation for each unit **110** of the vehicle combination 100. As such, the machine learning model is capable of providing safe torque allocations for vehicle combinations having different configurations of units, and a chosen allocation can be implemented at a global or a unit level.

The input operating point **140** may be a current operating point **140** of the vehicle combination **100**. In this way, a number of safe torque allocations can be provided online, i.e. as the vehicle combination **100** is in motion and a torque request is received. This ensures that the vehicle combination is controlled in an adaptive manner based on current operating parameters and travelling conditions.

**FIG. 4** shows an example plot **400** of torque allocations **402** for a vehicle combination **100** having a tractor unit **110-1** and a trailing unit **110-2**. In particular, the plotted torque allocations **402** are braking allocations input to the machine learning model at **330**. In this example, each torque allocation **402** represents an allocation $T_{tractor}$ for the tractor unit **110-1** and an allocation $T_{trailer}$ for the trailing unit **110-2**. In some examples, the machine learning model is configured to output a plurality of safe torque allocations for the vehicle combination **100**. In the example of **FIG. 4**, the safe torque allocations **404**, represented by crosses, are located between two limits **406a**, **406b**, outside of which a number of unsafe torque allocations **408a**, **408b**, represented by circles, are located. In this example, unsafe torque allocations **408a** correspond to jack knifing, while unsafe torque allocations **408b** correspond to trailer swing.

Where the machine learning model outputs a plurality of safe torque allocations, at **360**, a single one **404a**, **404b** of the plurality of safe torque allocations **404** is determined based on one or more first criteria. For example, a criteria may be set relating to a maximum level **410** of braking for the tractor unit **110-1**, and any of the plurality of safe torque allocations **404** that involve braking above this level may be disregarded. In the example of **FIG. 4**, this results in the selection of torque allocation **404a**. Another example of first criteria includes a minimum energy efficiency for the vehicle combination **100**. The selection can be made using one or more optimisation functions. In one example, it may be desired to select a safe torque allocation **404** that maximises braking of the tractor unit **110-1**.

In some examples, at **370**, a safety margin may be applied to the one or more output safe torque allocations. In particular, a safety margin may be applied at the limit between safe and unsafe torque allocations. In some examples, the safety margin may be an absolute value. In some examples, the safety margin may be a function of a parameter. In the example of **FIG. 4,** a safety margin **412** of 10% of the total braking allocation T is applied, resulting in a maximum braking torque allocation **404b.** As such, the braking torque is reduced to make the resultant torque allocation and resultant vehicle behaviour safer. In other examples, such as propulsion, an output safe torque allocation may be made safer by reducing one or more of the velocity v and/or acceleration $a$ of the vehicle combination by a certain amount. In this way, operation of the vehicle combination is maintained comfortably within a safe operating envelope and not near a limit **406a, 406b** of unsafe or unstable operation. In some examples, the safety margin may be a function of a parameter such as surface friction $\mu$, lateral acceleration $a_y$, or road wheel angle $\delta$. For example, for a lower surface friction $\mu$, the safety margin may be larger. In some examples, the safety margin may be an absolute value. In some examples, the safety margin may be a weighted function based on accuracy and/or uncertainties of input parameters. When the input variables are signals from measurements or estimations, an uncertainty in the signal can be approximated. Weights can then be assigned to each input parameter based on its accuracy and/or uncertainty. For example if a parameter has been measured or estimated with high accuracy and/or low uncertainty, it can be given a lower weight in the weighted function, resulting in a smaller safety margin. This means that the safety margin adjusts dynamically based on the reliability or confidence associated with the input parameters. This provides an adaptive and responsive safety margin, and can be useful for variables such as surface friction that are hard to estimate.

In some examples, at **380,** a check may be performed on the one or more output safe torque allocations **404** based on one or more second criteria, and a resulting action can be taken. In one example, it may be required that a minimum number of safe torque allocations **404** are output by the machine learning model. In one example, it may be required that the torque allocations have sufficient resolution (e.g. a sufficiently even distribution between maximum and minimum values). In one example, it may be required that all measurements adhere to a maximum uncertainty and/or minimum accuracy. If the one or more second criteria are not met, a resulting action may include generating an alert for the operator of the vehicle combination **100,** or modifying the torque request for the vehicle combination **100.** In this way, an operator of the vehicle may be informed that no optimal torque allocations are available, or that the vehicle combination **100** can be controlled in a different manner to satisfy the one or more second criteria. If the one or more second criteria are met, the method **300** may proceed.

In some examples, at **390,** an output safe torque allocation **404** may be caused to be implemented as a torque allocation for the vehicle combination **100.** This may be performed by a VMM of the vehicle combination **100,** as will be discussed in relation to **FIG. 5.** As such, the vehicle combination **100** is caused to move according to a torque allocation that has been ensured as being safe. As discussed above, the torque allocation can be determined based on a current operating point **140** of the vehicle combination **100,** meaning the safe torque allocation can be provided online, i.e. as the vehicle combination **100** is in motion.

By training and implementing a machine learning model in this way, a vehicle combination **100** can be provided with a fast and reliable way to output safe torque allocations based on a state of the vehicle combination. The training of the model avoids the output of unsafe and/or unstable operating modes of the vehicle combination. The model may be implemented online, so that the vehicle combination **100** can be controlled in a safe manner dependent on parameters of the vehicle combination and/or its environment. This implementation also allows a range of possible safe torque allocations to be provided, from which one can be chosen based on a given parameter, for example selecting a safe torque allocation that provides good energy efficiency. A safe torque allocation can be maintained comfortably within a safe operating envelope and not near a limit of unsafe or unstable operation.

**FIG. 5** is schematic diagram of an exemplary computer environment **500** for implementation of the methods **200** and **300.** The computer environment **500** may comprise a first computer system **502** for training a machine learning model and a second computer system **504** for implementing a trained machine learning model.

The first computer system **502** comprises processing circuitry **506** configured to perform the steps of the method **200.** To this end, the first computer system **502** may perform a plurality of simulations for motion of the vehicle combination **100,** classify each simulation as either safe or unsafe, and train a machine learning model using the resulting data points. The trained machine learning model may then be implemented by the first computer system **502,** or by another computer system, such as the second computer system **504.** In some examples, the first computer system **502** may be a remote system, implemented at a distance from the vehicle combination **100,** for example in a central operating facility associated with the vehicle combination **100.**

The second computer system **504** comprises processing circuitry **508** configured to perform the steps of the method **300.** To this end, the first computer system **502** may receive an input in the form of an operating point **140** of a vehicle combination **100,** and output one or more safe torque allocations for the vehicle combination **100.** The second computer system **504** may be a vehicle control unit configured to perform various vehicle control functions, such as vehicle motion management. In some examples, the second computer system **504** may be local to the vehicle combination **100.**

The first computer system **502** may be communicatively coupled to the second computer system **504** in any suitable way, for example via a circuit or any other wired, wireless, or network connection known in the art. Furthermore, the communicative coupling may be implemented as a direct connection between the first computer system **502** and the second computer system **504,** or may be implemented as a connection via one or more intermediate entities

The second computer system **504** may also be communicatively coupled to a VMM **510** comprising processing circuitry **512** configured to control components of the vehicle combination **100,** for example propulsion and/or braking systems of the vehicle combination **100.** The VMM **510** is implemented locally to the vehicle combination **100.** The VMM **510** may be implemented on a vehicle and/or a unit level, for example as a consolidated controller or a set of distributed controllers across the units **110** of the vehicle combination **100.** The VMM **510** may receive a safe torque allocation from the second computer system **504,** and implement it in the relevant systems of the vehicle combination **100.** For example, the VMM **510** may receive a safe torque allocation from the second computer system **504** for the vehicle combination **100,** which it translates into a torque allocation for each unit **110** of the vehicle combination **100.** Alternatively, the VMM 510 may receive a safe torque allocation from the second computer system **504** for each unit **110** of the vehicle combination **100.**

In some examples, the computer environment **500** may be implemented in a single location. That is to say the first computer system **502** and the second computer system **504** may be collocated, or may indeed be implemented as a single computer system. As such, the training of the machine learning model and its implementation may be performed at the same location. In one example, this combined system is implemented remotely from the vehicle combination **100,** for example in a central operating facility associated with the vehicle combination **100.** The implementation of the trained machine learning model could be used to generate a database or look-up table of safe torque allocations for different operating points, which could then be stored in a control system of the vehicle combination **100** for querying when necessary. This could reduce the computational resources required in the vehicle combination **100.** In another example, this combined system is implemented locally to the vehicle combination **100,** for example in a control system of the vehicle combination **100.** This means that all functions of the approached disclosed herein can be implemented in a self-contained manner on board the vehicle combination **100.**

**FIG. 6** is a schematic diagram of a computer system **600** for implementing examples disclosed herein. In particular, the computer system **600** may, according to some examples, be configured to cause performance of the method **200** of **FIG. 2** and/or the method **300** of **FIG. 3.** The computer system **600** may, according to some examples, be comprised in the first computer system **502** and/or the second computer system **504** of **FIG. 5.** The computer system **600** is adapted to execute instructions from a computer-readable medium to perform these and/or any of the functions or processing described herein. The computer system **600** may be connected (e.g., networked) to other machines in a LAN, an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602**. A basic input/output system (BIOS) **612** may be stored in the non-volatile memory **608** and can include the basic routines that help to transfer information between elements within the computer system **600**.

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618**. All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602**. In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602**. The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

> Example 1: A computer system (500, 502, 504) for training a machine learning model to determine a safe torque allocation (404) for a vehicle combination (100) comprising a tractor unit (110-1) and at least one trailing unit (110-2), the computer system (500, 502, 504) comprising processing circuitry (506, 508) configured to: perform a plurality of simulations for motion of the vehicle combination (100) based on a plurality of torque allocations and a plurality of operating points (140) for the vehicle combination (100); classify each simulation as safe or unsafe; and train a machine learning model using the plurality of simulations to determine a safe torque allocation (404) for the vehicle combination (100) based on an operating point (140) of the vehicle combination (100).
>
> Example 2: The computer system (500, 502, 504) of example 1, wherein: each torque allocation comprises a respective torque allocation for each unit (110) of the vehicle combination (100); and the sum of the respective torque allocations meets a total torque allocation for the vehicle combination (100).

Example 3: The computer system (500, 502, 504) of example 1 or 2, wherein each operating point (140) is defined based on one or more of a velocity v of the vehicle combination (100), a lateral acceleration $a_y$ of the vehicle combination (100), one or more axle loads $F_z$ of one or more units (110) of the vehicle combination (100), a yaw rate $\dot{\psi}$ of one or more units (110) of the vehicle combination (100), a slip angle $\alpha$ of one or more units (110) of the vehicle combination (100), a slip angular rate $\dot{\alpha}$ of one or more units (110) of the vehicle combination (100), a road wheel angle $\delta$ of one or more units (110) of the vehicle combination (100), a surface friction $\mu$, a curve radius r, and/or a path gradient.

Example 4: The computer system (500, 502, 504) of any preceding example, wherein the processing circuitry (506, 508) is configured to classify a simulation as unsafe if the simulation results in an instability of the vehicle combination (100).

Example 5: A computer system (500, 502, 504) for determining a safe torque allocation (404) for a vehicle combination (100) comprising a tractor unit (110-1) and at least one trailing unit (110-2), the computer system (500, 502, 504) comprising processing circuitry (506, 508) configured to: receive a plurality of torque allocations (402) that meet a torque request for the vehicle combination (100); receive an operating point (140) of a vehicle combination (100); and output, using a machine learning model trained according to any of examples 1 to 4, one or more safe torque allocations (404) for the vehicle combination (100) based on the received torque allocations (402) and operating point (140).

Example 6: The computer system (500, 502, 504) of example 5, wherein the received operating point (140) is a current operating point of the vehicle combination (100).

Example 7: The computer system (500, 502, 504) of example 5 or 6, wherein: the machine learning model is configured to output a plurality of safe torque allocations (404) for the vehicle combination (100); and the processing circuitry (506, 508) is configured to determine a safe torque allocation (404a, 404b) from the plurality of safe torque allocations based on one or more first criteria.

Example 8: The computer system (500, 502, 504) of any of examples 5 to 7, wherein the processing circuitry (506, 508) is configured to generate an alert or modify the torque request if the one or more output safe torque allocations (404) does not meet one or more second criteria.

Example 9: The computer system (500, 502, 504) of any of examples 5 to 8, wherein the processing circuitry (506, 508) is configured to apply a safety margin to the one or more output safe torque allocations (404).

Example 10: The computer system (500, 502, 504) of any of examples 5 to 9, wherein the processing circuitry (506, 508) is configured to cause an output safe torque allocation (404) to be implemented as a torque allocation for the vehicle combination (100).

Example 11: A computer system (500, 502, 504) for determining a safe torque allocation (404) for a vehicle combination (100) comprising a tractor unit (110-1) and at least one trailing unit (110-2), the computer system (500, 502, 504) comprising processing circuitry (506, 508) configured to: perform a plurality of simulations for motion of the vehicle combination (100) based on a plurality of torque allocations and a plurality of operating points (140) for the vehicle combination (100); classify each simulation as safe or unsafe; train a machine learning model using the plurality of simulations; receive a plurality of torque allocations (402) that meet a torque request for the vehicle combination (100); receive an operating point (140) of a vehicle combination (100); and output, using the trained machine learning model, one or more safe torque allocations (404) for the vehicle combination (100) based on the received torque allocations (402) and operating point (140).

Example 12: A vehicle (100) comprising the computer system (500, 502, 504) of any preceding example.

Example 13: A computer-implemented method (200) for training a machine learning model to determine a safe torque allocation (404) for a vehicle combination (100) comprising a tractor unit (110-1) and at least one trailing unit (110-2), the method (200) comprising: performing (210), by processing circuitry (506, 508) of a computer system (500, 502, 504), a plurality of simulations for motion of the vehicle combination (100) based on a plurality of torque allocations and a plurality of operating points (140) for the vehicle combination (100); classifying (220), by the processing circuitry (506, 508), each simulation as safe or unsafe; and training (230), by the processing circuitry (506, 508), a machine learning model using the plurality of simulations to determine a safe torque allocation (404) for the vehicle combination (100) based on an operating point (140) of the vehicle combination (100).

Example 14: The computer-implemented method (200) of example 13, wherein: each torque allocation comprises a respective torque allocation for each unit (110) of the vehicle combination (100); and the sum of the respective torque allocations meets a total torque allocation for the vehicle combination (100).

Example 15: The computer-implemented method (200) of example 13 or 14, wherein each operating point (140) is defined based on one or more of a velocity v of the vehicle combination (100), a lateral acceleration $a_y$ of the vehicle combination (100), one or more axle loads $F_z$ of one or more units (110) of the vehicle combination (100), a yaw rate $\dot{\psi}$ of one or more units (110) of the vehicle combination (100), a slip angle $\alpha$ of one or more units (110) of the vehicle combination (100), a slip angular rate $\dot{\alpha}$ of one or more units (110) of the vehicle combination (100), a road wheel angle $\delta$ of one or more units (110) of the vehicle combination (100), a surface friction $\mu$, a curve radius r, and/or a path gradient.

Example 16: The computer-implemented method (200) of any of examples 13 to 15, comprising classifying, by the processing circuitry (506, 508), a simulation as unsafe if the simulation results in an instability of the vehicle combination (100).

Example 17: A computer-implemented method (300) for determining a safe torque allocation (404) for a vehicle combination (100) comprising a tractor unit (110-1) and at least one trailing unit (110-2), the method (300) comprising: receiving (330), by processing circuitry (506, 508) of a computer system (500, 502, 504), a plurality of torque allocations (402) that meet a torque request for the vehicle combination (100); receiving (340), by the processing circuitry (506, 508), an operating point (140) of a vehicle combination (100); and outputting (350), by the processing circuitry (506, 508) and using a machine learning model trained according to example 12, one or more safe torque allocations (404) for the vehicle combination (100) based on the received torque allocations (402) and operating point (140).

Example 18: The computer-implemented method (300) example 17, comprising receiving (340), by the processing circuitry (506, 508), a current operating point (140) of the vehicle combination (100).

Example 19: The computer-implemented method (300) of example 17 or 18 comprising: outputting (350), by the processing circuitry (506, 508) and using the trained machine learning model, a plurality of safe torque allocations (404) for the vehicle combination (100); and determining (360), by the processing circuitry (506, 508), a safe torque allocation (404a, 404b) from the plurality of safe torque allocations (404) based on one or more first criteria.

Example 20: The computer-implemented method (300) of any of examples 17 to 19, further comprising, by the processing circuitry (506, 508), generating an alert or modify the torque request if the one or more output safe torque allocations (404) does not meet one or more second criteria.

Example 21: The computer-implemented method (300) of any of examples 17 to 20, further comprising, by the processing circuitry (506, 508), applying (370) a safety margin to the one or more output safe torque allocations (404).

Example 22: The computer-implemented method (300) of any of examples 17 to 21, further comprising, by the processing circuitry (506, 508), causing (380) an output safe torque allocation (404) to be implemented as a torque allocation for the vehicle combination (100).

Example 23: A computer-implemented method (200, 300) for determining a safe torque allocation (404) for a vehicle combination (100) comprising a tractor unit (110-1) and at least one trailing unit (110-2), the method comprising: performing (210), by processing circuitry (506, 508) of a computer system (500, 502, 504), a plurality of simulations for motion of the vehicle combination (100) based on a plurality of torque allocations and a plurality of operating points (140) for the vehicle combination (100); classifying (220), by the processing circuitry (506, 508), each simulation as safe or unsafe; training (230), by the processing circuitry (506, 508), a machine learning model using the plurality of simulations; receiving (330), by the processing circuitry (506, 508), a plurality of torque allocations (402) that meet a torque request for the vehicle combination (100); receiving (340), by the processing circuitry (506, 508), an operating point (140) of a vehicle combination (100); and outputting (350), by the processing circuitry (506, 508) and using the trained machine learning model, one or more safe torque allocations (404) for the vehicle combination (100) based on the received torque allocations (402) and operating point (140).

Example 24: A computer program product comprising program code for performing, when executed by processing circuitry (506, 508), the computer-implemented method (200, 300) of examples 13 to 23.

Example 25: A non-transitory computer-readable storage medium comprising instructions, which when executed by processing circuitry (506, 508), cause the processing circuitry to perform the computer-implemented method (200, 300) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (500, 502, 504) for training a machine learning model to determine a safe torque allocation (404) for a vehicle combination (100) comprising a tractor unit (110-1) and at least one trailing unit (110-2), the computer system (500, 502, 504) comprising processing circuitry (506, 508) configured to:

    perform a plurality of simulations for motion of the vehicle combination (100) based on a plurality of torque allocations and a plurality of operating points (140) for the vehicle combination (100);
    classify each simulation as safe or unsafe; and
    train a machine learning model using the plurality of simulations to determine a safe torque allocation (404) for the vehicle combination (100) based on an operating point (140) of the vehicle combination (100).

2. The computer system (500, 502, 504) of claim 1, wherein:

    each torque allocation comprises a respective torque allocation for each unit (110) of the vehicle combination (100); and
    the sum of the respective torque allocations meets a total torque allocation for the vehicle combination (100).

3. The computer system (500, 502, 504) of claim 1 or 2, wherein each operating point (140) is defined based on one or more of a velocity v of the vehicle combination (100), a lateral acceleration $a_y$ of the vehicle combination (100), one or more axle loads $F_z$ of one or more units (110) of the vehicle combination (100), a yaw rate $\dot{\psi}$ of one or more units (110) of the vehicle combination (100), a slip angle $\alpha$ of one or more units (110) of the vehicle combination (100), a slip angular rate $\dot{\alpha}$ of one or more units (110) of the vehicle combination (100), a road wheel angle $\delta$ of one or more units (110) of the vehicle combination (100), a surface friction $\mu$, a curve radius r, and a path gradient.

4. The computer system (500, 502, 504) of any preceding claim, wherein the processing circuitry (506, 508) is configured to classify a simulation as unsafe if the simulation results in an instability of the vehicle combination (100).

5. A computer system (500, 502, 504) for determining a safe torque allocation (404) for a vehicle combination (100) comprising a tractor unit (110-1) and at least one trailing unit (110-2), the computer system (500, 502, 504) comprising processing circuitry (506, 508) configured to:

    receive a plurality of torque allocations (402) that meet a torque request for the vehicle combination (100);
    receive an operating point (140) of the vehicle combination (100); and
    output, using a machine learning model trained according to any of claims 1 to 4, one or more safe torque allocations (404) for the vehicle combination (100) based on the received torque allocations (402) and operating point (140).

6. The computer system (500, 502, 504) of claim 5, wherein the received operating point (140) is a current operating point of the vehicle combination (100).

7. The computer system (500, 502, 504) of claim 5 or 6, wherein:

the machine learning model is configured to output a plurality of safe torque allocations (404) for the vehicle combination (100); and the processing circuitry (506, 508) is configured to determine a safe torque allocation (404a, 404b) from the plurality of safe torque allocations (404) based on one or more first criteria.

8. The computer system (500, 502, 504) of any of claims 5 to 7, wherein the processing circuitry (506, 508) is configured to generate an alert or modify the torque request if the one or more output safe torque allocations (404) does not meet one or more second criteria.

9. The computer system (500, 502, 504) of any of claims 5 to 8, wherein the processing circuitry (506, 508) is configured to apply a safety margin to the one or more output safe torque allocations (404).

10. The computer system (500, 502, 504) of any of claims 5 to 9, wherein the processing circuitry (506, 508) is configured to cause an output safe torque allocation (404) to be implemented as a torque allocation for the vehicle combination (100).

11. A vehicle (100) comprising the computer system (500, 502, 504) of any preceding claim.

12. A computer-implemented method (200) for training a machine learning model to determine a safe torque allocation (404) for a vehicle combination (100) comprising a tractor unit (110-1) and at least one trailing unit (110-2), the method (200) comprising:

performing (210), by processing circuitry (506, 508) of a computer system (500, 502, 504), a plurality of simulations for motion of the vehicle combination (100) based on a plurality of torque allocations and a plurality of operating points (140) for the vehicle combination (100); classifying (220), by the processing circuitry (506, 508), each simulation as safe or unsafe; and training (230), by the processing circuitry (506, 508), a machine learning model using the plurality of simulations to determine a safe torque allocation (404) for the vehicle combination (100) based on an operating point (140) of the vehicle combination (100).

13. A computer-implemented method (300) for determining a safe torque allocation (404) for a vehicle combination (100) comprising a tractor unit (110-1) and at least one trailing unit (110-2), the method (300) comprising:

receiving (330), by processing circuitry (506, 508) of a computer system (500, 502, 504), a plurality of torque allocations (402) that meet a torque request for the vehicle combination (100); receiving (340), by the processing circuitry (506, 508), an operating point (140) of a vehicle combination (100); and outputting (350), by the processing circuitry (506, 508) and using a machine learning model trained according to claim 12, one or more safe torque allocations (404) for the vehicle combination (100) based on the received torque allocations (402) and operating point (140).

14. A computer program product comprising program code for performing, when executed by processing circuitry (506, 508), the computer-implemented method (200, 300) of claim 12 and/or 13.

15. A non-transitory computer-readable storage medium comprising instructions, which when executed by processing circuitry (506, 508), cause the processing circuitry to perform the computer-implemented method (200, 300) of claim 12 and/or 13.

**Amended claims in accordance with Rule 137(2) EPC.**

1. A computer system (500, 502, 504) for training a machine learning model to determine safe torque allocations (404) for a vehicle combination (100) comprising a tractor unit (110-1) and at least one trailing unit (110-2), the computer system (500, 502, 504) comprising processing circuitry (506, 508) configured to:

perform a plurality of simulations for motion of the vehicle combination (100) based on a plurality of torque allocations and a plurality of operating points (140) for the vehicle combination (100); classify each simulation as safe or unsafe; and train a machine learning model using the plurality of simulations to determine a respective safe torque allocation (404) for the tractor unit (110-1) and each of the at least one trailing units (110-2) of vehicle combination (100) based on an operating point (140) of the vehicle combination (100).

2. The computer system (500, 502, 504) of claim 1, wherein:

each torque allocation comprises a respective torque allocation for each unit (110) of the vehicle combination (100); and
the sum of the respective torque allocations meets a total torque allocation for the vehicle combination (100).

3. The computer system (500, 502, 504) of claim 1 or 2, wherein each operating point (140) is defined based on one or more of a velocity v of the vehicle combination (100), a lateral acceleration $a_y$ of the vehicle combination (100), one or more axle loads $F_z$ of one or more units (110) of the vehicle combination (100), a yaw rate $\dot{\psi}$ of one or more units (110) of the vehicle combination (100), a slip angle $\alpha$ of one or more units (110) of the vehicle combination (100), a slip angular rate $\dot{\alpha}$ of one or more units (110) of the vehicle combination (100), a road wheel angle $\delta$ of one or more units (110) of the vehicle combination (100), a surface friction $\mu$, a curve radius r, and a path gradient.

4. The computer system (500, 502, 504) of any preceding claim, wherein the processing circuitry (506, 508) is configured to classify a simulation as unsafe if the simulation results in an instability of the vehicle combination (100).

5. A computer system (500, 502, 504) for determining safe torque allocations (404) for a vehicle combination (100) comprising a tractor unit (110-1) and at least one trailing unit (110-2), the computer system (500, 502, 504) comprising processing circuitry (506, 508) configured to:

   receive a plurality of torque allocations (402) that meet a torque request for the vehicle combination (100);
   receive an operating point (140) of the vehicle combination (100); and
   output, using a machine learning model trained by a computer system according to any of claims 1 to 4, a respective safe torque allocation (404) for the tractor unit (110-1) and each of the at least one trailing units (110-2) of the vehicle combination (100) based on the received torque allocations (402) and operating point (140).

6. The computer system (500, 502, 504) of claim 5, wherein the received operating point (140) is a current operating point of the vehicle combination (100).

7. The computer system (500, 502, 504) of claim 5 or 6, wherein:

   the machine learning model is configured to output a plurality of safe torque allocations (404) for the vehicle combination (100); and
   the processing circuitry (506, 508) is configured to determine a safe torque allocation (404a, 404b) from the plurality of safe torque allocations (404) based on one or more first criteria.

8. The computer system (500, 502, 504) of any of claims 5 to 7, wherein the processing circuitry (506, 508) is configured to generate an alert or modify the torque request if the one or more output safe torque allocations (404) does not meet one or more second criteria.

9. The computer system (500, 502, 504) of any of claims 5 to 8, wherein the processing circuitry (506, 508) is configured to apply a safety margin to the one or more output safe torque allocations (404).

10. The computer system (500, 502, 504) of any of claims 5 to 9, wherein the processing circuitry (506, 508) is configured to cause output safe torque allocations (404) to be implemented as respective torque allocations for each vehicle unit of the vehicle combination (100).

11. A vehicle (100) comprising the computer system (500, 502, 504) of any preceding claim.

12. A computer-implemented method (200) for training a machine learning model to determine safe torque allocations (404) for a vehicle combination (100) comprising a tractor unit (110-1) and at least one trailing unit (110-2), the method (200) comprising:

   performing (210), by processing circuitry (506, 508) of a computer system (500, 502, 504), a plurality of simulations for motion of the vehicle combination (100) based on a plurality of torque allocations and a plurality of operating points (140) for the vehicle combination (100);
   classifying (220), by the processing circuitry (506, 508), each simulation as safe or unsafe; and
   training (230), by the processing circuitry (506, 508), a machine learning model using the plurality of simulations to determine a respective safe torque allocation (404) for the tractor unit (110-1) and each of the at least one trailing units (110-2) of the vehicle combination (100) based on an operating point (140) of the vehicle combination (100).

13. A computer-implemented method (300) for determining safe torque allocations (404) for a vehicle combination (100) comprising a tractor unit (110-1) and at least one trailing unit (110-2), the method (300) comprising:

   receiving (330), by processing circuitry (506, 508) of a computer system (500, 502, 504), a plurality of torque allocations (402) that meet a torque request for the vehicle combination (100);

receiving (340), by the processing circuitry (506, 508), an operating point (140) of a vehicle combination (100); and

outputting (350), by the processing circuitry (506, 508) and using a machine learning model trained according to claim 12, a respective safe torque allocation (404) for the tractor unit (110-1) and each of the at least one trailing units (110-2) of the vehicle combination (100) based on the received torque allocations (402) and operating point (140).

14. A computer program product comprising program code for performing, when executed by processing circuitry (506, 508), the computer-implemented method (200, 300) of claim 12 and/or 13.

15. A non-transitory computer-readable storage medium comprising instructions, which when executed by processing circuitry (506, 508), cause the processing circuitry to perform the computer-implemented method (200, 300) of claim 12 and/or 13.

**FIG. 1**

## 200

| |
|---|
| Perform a plurality of simulations for motion of a vehicle combination |

210

| |
|---|
| Classify each simulation as either safe or unsafe |

220

| |
|---|
| Train a machine learning model based on the classified simulations |

230

**FIG. 2**

$400$

$402$

$408a$

$T_{trailer}$

$412$

$404$

$406a$ $404b$

$408b$

$404a$

$410$ $406b$

$T_{tractor}$

**FIG. 4**

300

```
┌ ─ ─ ─ ─ ─ ─ ─ ─ ─ ─ ─ ─ ─ ─ ─ ─ ─ ─ ─ ─ ─ ─ ─ ─ ─ ┐
    Receive a torque request for a vehicle combination
└ ─ ─ ─ ─ ─ ─ ─ ─ ─ ─ ─ ─ ─ ─ ─ ─ ─ ─ ─ ─ ─ ─ ─ ─ ─ ┘
```
310

```
┌ ─ ─ ─ ─ ─ ─ ─ ─ ─ ─ ─ ─ ─ ─ ─ ─ ─ ─ ─ ─ ─ ─ ─ ─ ─ ┐
  Determine a number of torque allocations that meet the
                   torque request
└ ─ ─ ─ ─ ─ ─ ─ ─ ─ ─ ─ ─ ─ ─ ─ ─ ─ ─ ─ ─ ─ ─ ─ ─ ─ ┘
```
320

```
┌ ───────────────────────────────────────────────────┐
     Receive the torque allocations at a machine learning
                        model
└ ───────────────────────────────────────────────────┘
```
330

```
┌ ───────────────────────────────────────────────────┐
   Receive an operating point of the vehicle combination at
                 the machine learning model
└ ───────────────────────────────────────────────────┘
```
340

```
┌ ───────────────────────────────────────────────────┐
   Output from the machine learning model one or more safe
         torque allocations for the vehicle combination
└ ───────────────────────────────────────────────────┘
```
350

```
┌ ─ ─ ─ ─ ─ ─ ─ ─ ─ ─ ─ ─ ─ ─ ─ ─ ─ ─ ─ ─ ─ ─ ─ ─ ─ ┐
  Determine a single safe torque allocation based on one or
                    more first criteria
└ ─ ─ ─ ─ ─ ─ ─ ─ ─ ─ ─ ─ ─ ─ ─ ─ ─ ─ ─ ─ ─ ─ ─ ─ ─ ┘
```
360

```
┌ ─ ─ ─ ─ ─ ─ ─ ─ ─ ─ ─ ─ ─ ─ ─ ─ ─ ─ ─ ─ ─ ─ ─ ─ ─ ┐
   Apply a safety margin to the one or more output safe
                  torque allocations
└ ─ ─ ─ ─ ─ ─ ─ ─ ─ ─ ─ ─ ─ ─ ─ ─ ─ ─ ─ ─ ─ ─ ─ ─ ─ ┘
```
370

```
┌ ─ ─ ─ ─ ─ ─ ─ ─ ─ ─ ─ ─ ─ ─ ─ ─ ─ ─ ─ ─ ─ ─ ─ ─ ─ ┐
   Take an action if the one or more output safe torque
   allocations does not meet one or more second criteria
└ ─ ─ ─ ─ ─ ─ ─ ─ ─ ─ ─ ─ ─ ─ ─ ─ ─ ─ ─ ─ ─ ─ ─ ─ ─ ┘
```
380

```
┌ ─ ─ ─ ─ ─ ─ ─ ─ ─ ─ ─ ─ ─ ─ ─ ─ ─ ─ ─ ─ ─ ─ ─ ─ ─ ┐
  Cause an output safe torque allocation to be implemented
       as a torque allocation for the vehicle combination
└ ─ ─ ─ ─ ─ ─ ─ ─ ─ ─ ─ ─ ─ ─ ─ ─ ─ ─ ─ ─ ─ ─ ─ ─ ─ ┘
```
390

**FIG. 3**

500

100

502        506        504        508

510        512

**FIG. 5**

600

604

608

612

610

616        618

602

606

614

620

622        624        626

**FIG. 6**

## EUROPEAN SEARCH REPORT

**Application Number**

EP 24 15 1599

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/237176 A1 (VOLVO TRUCK CORP [SE]) 14 December 2023 (2023-12-14) * claims 1-17 * * figures 1,8,9 * | 1-15 | INV. B60W30/02 G06N3/08 B60T8/17 B60T8/1755 G05B13/02 G05B17/02 G06N5/025 |
| Y | US 2023/339455 A1 (WESTON KEITH [US] ET AL) 26 October 2023 (2023-10-26) * paragraphs [0031], [0036] * * figure 1 * | 1-15 | |
| Y | US 2022/242422 A1 (THOMPSON MICHAEL [US] ET AL) 4 August 2022 (2022-08-04) * claims 1-14 * * paragraph [0058] * | 1-15 | |
| Y | CN 116 880 503 A (UNIV NANJING AERONAUTICS & ASTRONAUTICS) 13 October 2023 (2023-10-13) * claims 1-8 * | 1-15 | |
| Y | EP 2 045 155 A1 (FORD GLOBAL TECH LLC [US]) 8 April 2009 (2009-04-08) * paragraph [0058] - paragraph [0060] * * paragraphs [0122], [0123] * * paragraph [0095] * * figure 1 * | 1-15 | **TECHNICAL FIELDS SEARCHED (IPC)** B60W G06N B60T G05B |
| Y | EP 4 249 296 A1 (VOLVO TRUCK CORP [SE]) 27 September 2023 (2023-09-27) * the whole document * | 1-15 | |

The present search report has been drawn up for all claims

| Place of search | Date of completion of the search | Examiner |
|---|---|---|
| Munich | 4 June 2024 | Colonna, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 1599

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2024

| Patent document cited in search report | Publication date | Patent family member(s) | | Publication date |
|---|---|---|---|---|
| WO 2023237176 A1 | 14-12-2023 | NONE | | |
| US 2023339455 A1 | 26-10-2023 | NONE | | |
| US 2022242422 A1 | 04-08-2022 | NONE | | |
| CN 116880503 A | 13-10-2023 | NONE | | |
| EP 2045155 A1 | 08-04-2009 | CN | 101402363 A | 08-04-2009 |
| | | EP | 2045155 A1 | 08-04-2009 |
| | | US | 2009093928 A1 | 09-04-2009 |
| | | US | 2011257860 A1 | 20-10-2011 |
| EP 4249296 A1 | 27-09-2023 | EP | 4249296 A1 | 27-09-2023 |
| | | US | 2023303089 A1 | 28-09-2023 |

EPO FORM P0459

For more details about this annex : see Official Journal of the European Patent Office, No. 12/82